# EUROPÄISCHE PATENTSCHRIFT

(11) **EP 2 325 591 B1**
(45) Veröffentlichungstag und Bekanntmachung des Hinweises auf die Patenterteilung: **10.01.2018**
(21) Anmeldenummer: 10014099.5
(22) Anmeldetag: 29.10.2010
(51) Int. Cl.: F26B 15/14

(54) **Anlage zum Trocknen von Gegenständen**
Assembly for drying objects
Installation destinée au séchage d'objets

(30) Priorität: 24.11.2009 DE 102009054404
(43) Veröffentlichungstag der Anmeldung: 25.05.2011
(73) Patentinhaber: Eisenmann SE, 71032 Böblingen (DE)
(72) Erfinder: Swoboda, Werner, 71032 Böblingen (DE); Preussner, Markus, 71144 Steinenbronn (DE); Hanf, Jürgen, 72070 Tübingen (DE)
(74) Vertreter: Ostertag & Partner Patentanwälte mbB

(56) Entgegenhaltungen:
- DE-A1- 2 422 186
- US-A1- 2006 162 648
- US-B1- 6 269 941

## Beschreibung

Die Erfindung betrifft eine Anlage zum Trocknen von Gegenständen, insbesondere von Fahrzeugkarosserien, mit
a) wenigstens einer Trockenkammer, in welcher eine Betriebsatmosphäre erzeugbar ist, die eine höhere Temperatur als die Atmosphäre außerhalb der Trockenkammer hat;
b) einem Fördersystem, welches wenigstens einen Skid, auf welchem der Gegenstand durch die Trockenkammer förderbar ist, und eine Fördereinheit für den wenigstens einen Skid umfasst;
wobei
c) der Skid wenigstens zwei Auflagekufen umfasst, an denen eine Befestigungseinrichtung zum lösbaren Befestigen des Gegenstandes angebracht ist.

Derartige Trockner, wie sie beispielsweise aus der US 2006/162648 A1 bekannt sind, die eine Beschichtungsanlage mit einer Lackierkabine und einer gesonderten Trocknerkabine beschreibt, werden insbesondere in der Automobilindustrie eingesetzt, um Gegenstände zu trocknen, deren Oberfläche in einem vorhergehenden Vorgang behandelt, insbesondere lackiert, wurde. Bei den zu trocknenden Gegenständen kann es sich insbesondere um Fahrzeugkarosserien, aber auch um sonstige Baugruppen und Bauteile handeln, die auch aus nichtmetallischen Materialien, insbesondere aus Kunststoff, gefertigt sein können.

Wenn es sich bei den zu trocknenden Bauteilen um kleinere Teile handelt, können diese in einem Tragkorb oder dergleichen untergebracht sein, der an dem Skid befestigt werden kann.

Skids, wie sie beispielsweise aus der US 6 269 941 bekannt sind, die einen Rollenförderer für solche Skids beschreibt, werden insbesondere in der Automobilindustrie zum Transport von Gegenständen zwischen und auch in einzelnen Bearbeitungs- oder Behandlungsstationen verwendet. Dabei arbeiten die Auflagekufen des Skids mit Fördermitteln, wie beispielsweise einem Bandförderer oder einem Rollenbahnförderer, zusammen. Die von den Skids zu tragende Last beträgt abhängig von den zu behandelnden Gegenständen in der Regel zwischen 20 kg, z.B. bei Kunststoffteilen, und bis zu 3000 kg oder mehr. Auch die Größe und die Masse des verwendeten Skids hängen von den zu behandelnden Gegenständen ab, wobei die Masse des Skids üblicherweise zwischen etwa 150 kg für leichte und bis zu 1500 kg für schwere Gegenstände variiert.

Besonders Fahrzeugkarosserien durchlaufen mehrere Oberflächenbehandlungen, nach denen sie jeweils wieder getrocknet werden müssen, bevor die Fahrzeugkarosserien einer weiteren Behandlung unterzogen werden können. Beispiele für solche Behandlungen sind die kathodische Tauchlackierung, der Füllerauftrag, die Ausbildung des Unterbodenschutzes, das Nahtabdichten und das Aufbringen von farbgebendem Lack und Klarlack.

Die einzelnen Behandlungsstationen und die einzelnen Trockner werden in der Regel von den zu behandelnden Gegenständen auf einem Skid durchlaufen.

Mit den zu trocknenden Gegenständen wird somit jedes Mal auch der Skid aufgeheizt, um ihn danach wieder mit den Gegenständen abzukühlen zu lassen. Bei Skids, wie sie üblicherweise verwendet werden, liegt die größte Masse in deren Auflagekufen. Diese nehmen auch den größten Teil der in den Skid eingetragenen Wärme auf.

Abhängig von dem Verhältnis zwischen dem Gewicht des Skids und dem Gewicht des oder der Gegenstände auf dem Skid wird bei jedem Trockenvorgang ein beträchtlicher Energieanteil zum Aufheizen des Skids verbraucht, was die Gesamtenergiebilanz im Hinblick auf die zu trocknenden Gegenstände signifikant verschlechtert und die Gesamtbetriebskosten der Anlage somit erhöht.

Als erstes Beispiel sei angenommen, eine Fahrzeugkarosserie mit einer Masse von 400 kg wird auf einem Skid aus Stahl mit einer Masse von 150 kg durch einen Trockner gefördert, in dessen Trockenkammer eine Temperatur von 180 °C herrscht. Die Außentemperatur betrage 20 °C und der Durchsatz liege bei 22 mit jeweils einer Fahrzeugkarosserie beladenen Skids pro Stunde.

Unter Vernachlässigung eines Wirkungsgrades des Trockners sind in diesem Fall für die Aufheizung der Skids pro Stunde etwa 75 kWh und für die Aufheizung der Fahrzeugkarosserien etwa 200 kWh erforderlich. Somit gehen für das Mitaufheizen der Skids etwa 27% der für die Trocknung der Fahrzeugkarosserien notwendigen Gesamtenergie verloren.

Bei einem unterstellten Gaspreis von etwa 0,04 EURO pro kWh belaufen sich die Energiekosten nur für Skiderwärmung auf etwa 3,00 EURO pro Stunde.

Als zweites Beispiel sei angenommen, Kunststoffteile mit einer Masse von 25 kg werden auf einem Skid aus Stahl mit einer Masse von 120 kg durch einen Trockner gefördert, in dessen Trockenkammer eine Temperatur von 100 °C herrscht. Die Außentemperatur betrage ebenfalls 20 °C, wogegen der Durchsatz bei 100 mit Kunststoffteilen beladenen Skids pro Stunde liege.

Unter erneuter Vernachlässigung eines Wirkungsgrades des Trockners sind in diesem Fall für die Aufheizung der Skids pro Stunde etwa 136 kWh und für die Aufheizung der Kunststoffteile etwa 94 kWh erforderlich. Somit werden zum Mitaufheizen der Skids allein etwa 59% der für die Trocknung der Kunststoffteile notwendigen Gesamtenergie verbraucht.

Bei einem unterstellten Gaspreis von etwa 0,04 EURO pro kWh betragen die Energiekosten nur für Skiderwärmung bei diesem Beispiel etwa 5,40 EURO pro Stunde.

Es ist daher Aufgabe der Erfindung, eine Anlage zum Trocknen von Gegenständen der eingangs genannten Art zu schaffen, deren Energiebilanz verbessert ist.

Diese Aufgabe wird bei einer Vorrichtung der eingangs genannten Art dadurch gelöst, dass
d) eine thermische Isolationseinrichtung vorgesehen ist, welche wenigstens die Auflagekufen des Skids zumindest bereichsweise abschirmt.

Erfindungsgemäß wird durch diese Maßnahmen erreicht, dass der Wärmeeintrag in besonderes die Auflagekufen des Skids kleiner ist und der Skid sich auf seinem Weg durch den Trockner weniger stark erwärmt als dies ohne diese Maßnahmen der Fall wäre. Hierdurch wird ein geringerer Anteil der zum Trocknen der Gegenstände benötigten Gesamtenergie zum Erwärmen des Skids vergeudet, wodurch die Energiebilanz der Anlage verbessert ist.

Dies wird vorteilhaft unterstützt, wenn wenigstens die Auflagekufen des Skids zumindest bereichsweise aus einem der nachstehenden Materialien gebildet sind: hochfester oder niedriglegierter Stahl, Aluminium oder Aluminium-Legierung; Titan oder Titan-Legierung.

In der Praxis hat es sich als günstig erwiesen, wenn wenigstens die Auflagekufen des Skids zumindest bereichsweise aus einem Molybdän-Stahl gebildet sind. Konkret konnten gute Ergebnisse erzielt werden, wenn wenigstens die Auflagekufen des Skids zumindest bereichsweise aus 20MoCr4-Stahl, 18CrNiMo7-Stahl, 41CrAlMo7-Stahl oder auch als Alternative zu einem Molybdän-Stahl aus 13MnCrB4-Stahl gebildet sind.

Im Hinblick auf die thermische Isolationseinrichtung ist es von Vorteil, wenn diese ein oder mehrere Isolationselemente umfasst, welche auf einer ersten Längsseite der Auflagekufen und/oder auf der zweiten Längsseite der Auflagekufen des Skids angeordnet sind, wenn der Skid durch die Trockenkammer gefördert wird. Auf diese Weise lässt sich ein Wärmeeintrag in die Auflagekufen des Skids effektiv verringern.

Eine gute Isolationswirkung wird erzielt, wenn wenigstens ein Isolationselement als doppelwandige und mit Mineralstoff gefüllte Platte oder aus Mineralstoff, aus Keramikschaum oder aus Kunststoffschaum, insbesondere als Platte hieraus, gebildet ist.

Im Fall der doppelwandigen Platte können deren Außenwände z.B. aus Blech gefertigt sein. Wenn eine Mineralstoffplatte verwendet wird, ist deren Oberfläche vorzugsweise derart geschlossen, dass das Eindringen und Ablagern von Kondensat aus der Atmosphäre in der Trockenkammer verhindert ist. Als Keramikschaum oder Kunststoffschaum werden vorzugsweise geschlossenporige Schäume verwendet, so dass auch dort kein Kondensat in die Isolationselemente eindringen und sich dort ablagern kann. Isolationselemente aus Keramikschaum kommen bevorzugt zum Einsatz, wenn in der Trockenkammer eine Betriebstemperatur von mehr als 100 °C vorgesehen ist. Bei einer Betriebstemperatur in der Trockenkammer von weniger als 100 °C haben sich Isolationselemente aus Kunststoffschäumen bewährt.

Es ist günstig, wenn die thermische Isolationseinrichtung von der Fördereinheit des Fördersystems umfasst ist. So können gegebenenfalls auch bereits vorhandene Anlagen um die Isolationseinrichtung ergänzt werden, ohne dass bereits verwendete Skids verändert werden müssen.

Es ist vorteilhaft, wenn die thermische Isolationseinrichtung Isolationsplatten umfasst, welche derart angeordnet sind, dass sie die Auflagekufen des Skids seitlich, vorzugsweise zu jeweils beiden Seiten, flankieren, wenn dieser durch die Trockenkammer gefördert wird.

Dabei können die Isolationsplatten insbesondere von Zugmitteln der Fördereinheit mitgeführt werden.

Alternativ kann die thermische Isolationseinrichtung eine Isolationshülle umfassen, welche die Fördereinheit zumindest gegenüber der Trockenkammer weitgehend abschirmt.

In einer Abwandlung kann die thermische Isolationseinrichtung von dem Skid umfasst sein. In diesem Fall können die Fördereinheiten bereits vorhandener Anlagen unverändert weiter genutzt werden.

In diesem Fall ist es günstig, wenn der Skid Isolationselemente trägt, wobei diese vorzugsweise zumindest bereichsweise auch weitere Bauteile des Skids abschirmen. Dies kann z.B. die Befestigungseinrichtung des Skids sein.

Nachfolgend werden Ausführungsbeispiele der Erfindung anhand der Zeichnungen näher erläutert. In diesen zeigen:
- Figur 1: einen Schnitt eines Skids zum Fördern von Fahrzeugkarosserien entlang der Schnittlinie I-I in Figur 2;
- Figur 2: eine Aufsicht auf den Skid von Figur 1;
- Figur 3: einen vertikalen Schnitt eines Trockners zum Trocknen von Fahrzeugkarosserien mit einem Fördersystem;
- Figur 4: schematisch eine Seitenansicht eines Antriebs für Skids mittels Zugmittel;
- Figur 5: den Antrieb mit Skid von Figur 4, wobei ein erstes Ausführungsbeispiel einer Isolationseinrichtung zur Verringerung eines Wärmeeintrages in den Skid gezeigt ist;
- Figur 6: einen Schnitt durch den Antrieb mit Isolationseinrichtung von Figur 5 entlang der dortigen Schnittlinie VI-VI;
- Figur 7: einen der Figur 1 entsprechenden Schnitt durch einen Skid mit einem zweiten Ausführungsbeispiel einer Isolationseinrichtung;
- Figur 8: eine Seitenansicht eines Skids, bei welchem ein drittes Ausführungsbeispiel einer Isolationseinrichtung vorgesehen ist;
- Figur 9: eine Aufsicht des Skids von Figur 8;
- Figur 10: einen Schnitt des Skids der Figuren 8 und 9 entlang der Schnittlinie X-X in Figur 9;
- Figur 11: einen der Figur 3 entsprechenden vertikalen Schnitt eines Trockners zum Trocknen von Fahrzeugkarosserien, bei welcher das Fördersystem ein viertes Ausführungsbeispiel einer Isolationseinrichtung umfasst.

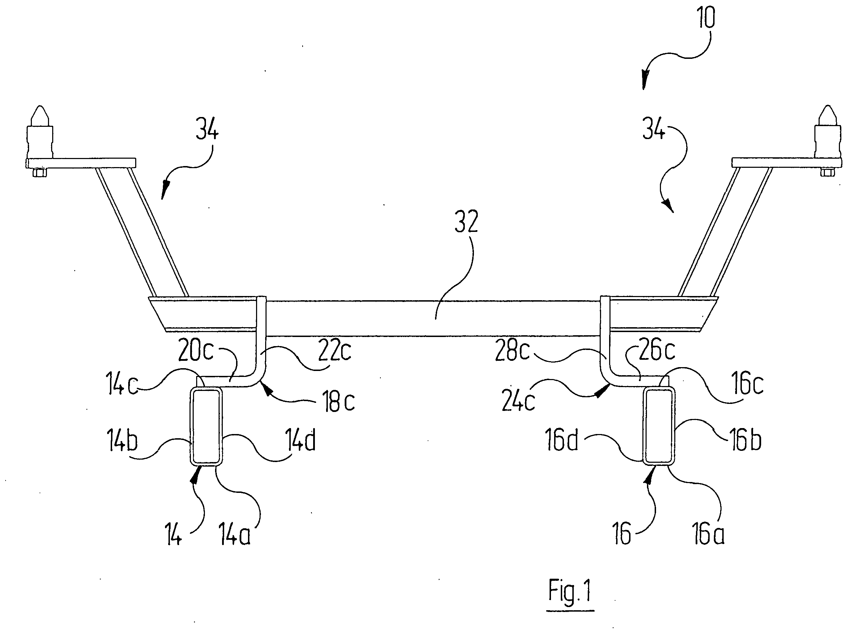

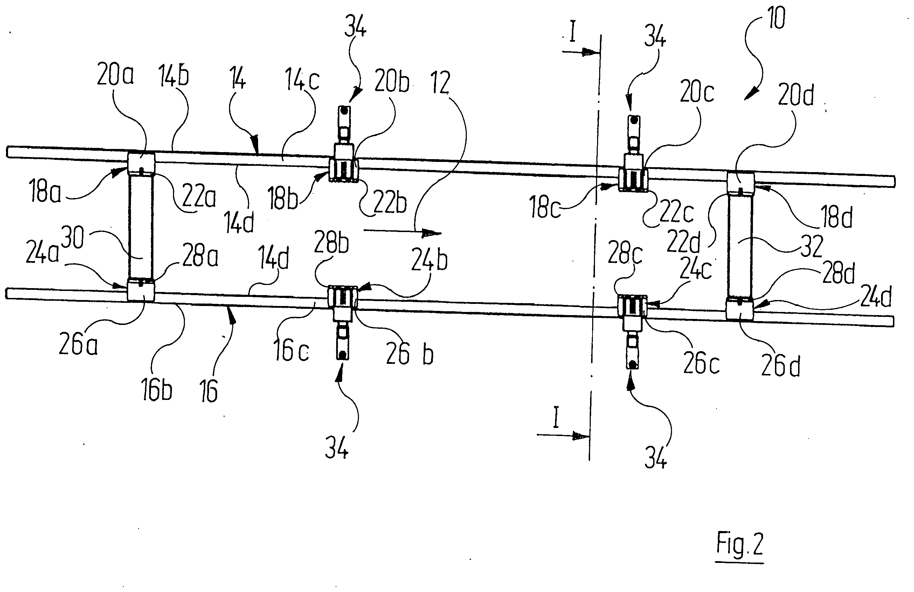

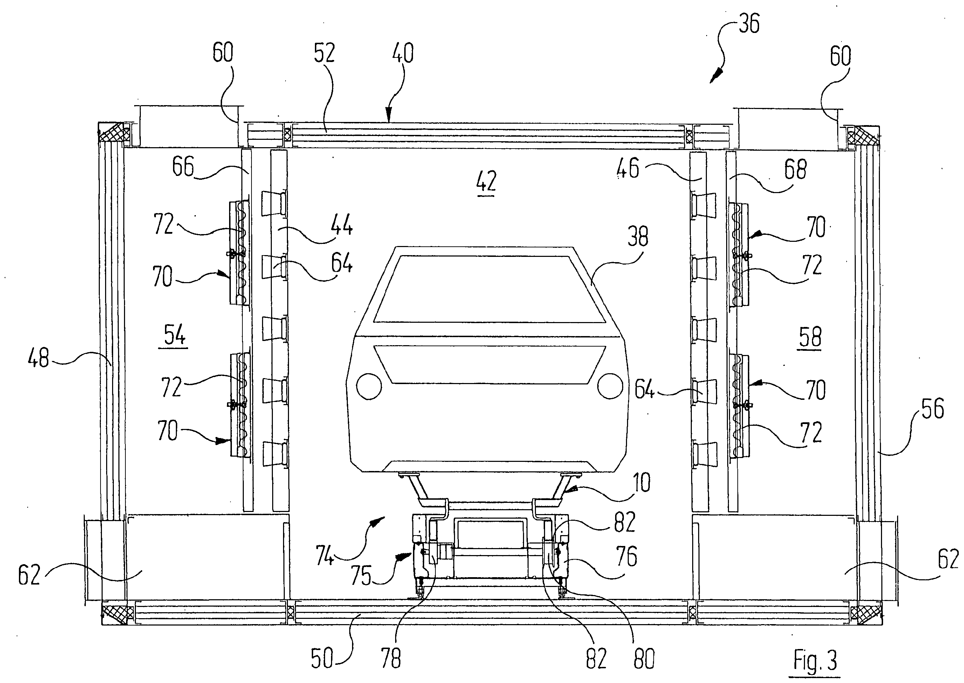

In den Figuren 1 und 2 ist ein Transportgestell 10 gezeigt, auf welchem eine in Figur 3 mit dem Bezugszeichen 38 versehene Fahrzeugkarosserie lösbar angebracht werden kann. Ein solches Transportgestell 10 wird allgemein und nachstehend als "Skid" bezeichnet. Auf derartigen Skids werden Fahrzeugkarosserien z.B. nach deren Lackierung durch einen Trockner geführt, um aufgebrachten Lack oder eine sonstige Beschichtung zu trocknen.

Der Skid 10 gibt eine durch einen Pfeil angedeutete Haupttransportrichtung 12 vor, in welcher er durch einen Trockner geführt wird, kann jedoch auch in die entgegengesetzte Richtung oder zur Seite bewegt werden.

Der Skid 10 umfasst zwei parallel verlaufende Auflagekufen, nämlich eine bezogen auf die Haupttransportrichtung 12 linke Auflagekufe 14 und eine bezogen auf die Haupttransportrichtung 12 rechte Auflagekufe 16. Diese sind als Hohlprofil-Längsholme mit rechteckigem Querschnitt ausgebildet und haben vier Außenflächen, eine untere horizontale Außenfläche 14a, 16a, eine bezogen auf die Längsachse des Skids 10 nach außen weisende erste vertikale Längsfläche 14b, 16b auf einer ersten Längsseite, eine obere horizontale Außenfläche 14c, 16c und eine bezogen auf die Längsachse des Skids 10 nach innen weisende vertikale Längsfläche 14d, 16d auf der jeweils entsprechenden zweiten Längsseite.

Die linke Auflagekufe 14 trägt auf ihrer oberen Außenfläche 14c jeweils vier von einander beabstandet angeordnete Halteplatten 18a, 18b, 18c, 18d. Diese sind in zur Haupttransportrichtung 12 entgegengesetzten Richtung betrachtet im Querschnitt L-förmig, und haben einen Horizontalschenkel 20a, 20b, 20c bzw. 20d und einen Vertikalschenkel 22a, 22b, 22c bzw. 22d. Der jeweilige Horizontalschenkel 20a, 20b, 20c 20d der Halteplatten 18a, 18b, 18c, 18d ist jeweils so mit der oberen Außenfläche 14c der linken Auflagekufe 14 verschweißt, dass der jeweilige Vertikalschenkel 22a, 22b, 22c, 22d der Halteplatten 18a, 18b, 18c, 18d in Richtung der senkrecht oberen Außenfläche 14a der Auflagekufe 14 von dieser weg verläuft und in Richtung der Längsachse-des Skids 10 weist.

In entsprechender Weise trägt die rechte Auflagekufe 16 auf ihrer oberen Außenfläche 16c jeweils vier von einander beabstandet angeordnete L-förmige Halteplatten 24a, 24b, 24c, 24d mit jeweils einem Horizontalschenkel 26a, 26b, 26c bzw. 26d und einen Vertikalschenkel 28a, 28b, 28c bzw. 28d. Die jeweiligen Vertikalschenkel 28a, 28b, 28c bzw. 28d der Halteplatten 24a, 24b, 24c, 24d weisen in Richtung auf die jeweilige Vertikalschenkel 22a, 22b, 22c, 22d der Halteplatten 18a, 18b, 18c, 18d.

Die Auflagekufen 14, 16 sind mittels zweier ebenfalls als Hohlprofil ausgebildeter Quertraversen 30, 32 miteinander verbunden, wodurch insgesamt eine ausreichend verwindungssteife Rahmenstruktur geschaffen ist, die eine Tragebene des Skids 10 vorgibt. Die Quertraversen 30, 32 erstrecken sich zwischen den Vertikalschenkeln 22a und 22d sowie 28a und 28d der in Haupttransportrichtung 12 hintersten und vordersten Halteplatten 18a und 18d bzw. 24a und 24d der Auflagekufen 14 und 16.

Die Vertikalschenkel 22b und 22c sowie 28b und 28c der mittleren Halteplatten 18b und 18c bzw. 24b und 24c der Auflagekufen 16 und 18 tragen jeweils eine Montagehalterung 34, welche gemeinsam eine Befestigungseinrichtung für eine Fahrzeugkarosserie 38 bilden. An diesen vier Montagehalterungen 34 kann eine zu fördernde Fahrzeugkarosserie 38 lösbar befestigt werden. Die Montagehalterungen 34 können abhängig von der zu fördernden Fahrzeugkarosserie 38 baulich unterschiedlich ausfallen und entsprechend angepasst sein, weshalb hier nicht weiter auf die Montagehalterungen 34 eingegangen werden soll.

In Figur 3 ist mit 36 insgesamt ein Trockner bezeichnet, in welchem ein Lack auf einer Fahrzeugkarosserie 38 getrocknet werden kann, der in einem vorhergehenden Beschichtungsvorgang auf die Fahrzeugkarosserie 38 appliziert worden ist. Der Trockner 36 umfasst ein Gehäuse 40, in welchem als Trockenkammer ein Trockentunnel 42 ausgebildet ist, der seitlich von zwei inneren Trennwänden 44 und 46 begrenzt ist.

Eine in Figur 3 linke Seitenwand 48 des Gehäuses 40, dessen Boden 50 und dessen Decke 52 begrenzen gemeinsam mit der in Figur 3 linken Trennwand 44 einen ersten Druckraum 54. In entsprechender Weise begrenzen die in Figur 3 rechte Seitenwand 56 des Gehäuses 40, dessen Boden 50 und dessen Decke 52 gemeinsam mit der in Figur 3 rechten Trennwand 46 einen zweiten Druckraum 58.

Den Druckräumen 54 und 58 kann über Zuführöffnungen 60 in der Decke 52 des Gehäuses 40 unter Druck stehende Trockenluft zugeführt werden. Die Trockenluft wird vorher konditioniert und dazu in an und für sich bekannter Weise gereinigt und entfeuchtet.

Am Boden 50 des Gehäuses 40 sind Absaugkanäle 62 vorgesehen, welche mit dem Trockentunnel 42 kommunizieren und sich nach außen durch die Seitenwände 48 bzw. 56 des Gehäuses hindurch erstrecken.

Die Druckräume 54 und 58 sind jeweils durch mehrere Düsenhülsen 64, die sich durch die entsprechende Trennwand 44, 46 erstrecken, mit dem Trockentunnel 42 verbunden. Diese Düsenhülsen 64 sind beweglich in Öffnungen in der jeweiligen Trennwand 44, 46 gelagert, so dass ihre Winkelorientierung verstellbar ist. Von den Düsenhülsen 64 ist in jeder Trennwand 44, 46 nur jeweils eine mit einem Bezugszeichen versehen.

Auf der jeweils vom Trockentunnel 42 abliegenden Seite der Trennwände 44, 46 ist in jedem Druckraum 54 und 58 eine Zwischenwand 66 bzw. 68 angeordnet, in denen Heißgasfilter 70 mit gewellten Vliesmatten 72 vorgesehen sind. Diese dienen dazu, die Trockenluft von noch gegebenenfalls von ihr mitgeführten Feststoffpartikeln zu befreien, welche das Lackierergebnis verschlechtern würden, da die Trockenluft mit einer Geschwindigkeit von bis zu 7 m/s gefördert wird und mit dieser Geschwindigkeit auf die Fahrzeugkarosserien 38 trifft.

Zu trocknende Fahrzeugkarosserien 38 werden mittels eines Fördersystems 74 auf dem Skid 10 durch den Trockentunnel 42 gefördert. Das Fördersystem 74 umfasst hierzu neben mehreren Skids 10 eine Fördereinheit 75 für diese. Eine Tragstruktur 76 lagert eine Vielzahl von Paaren aus Förderrollen 78 und 80 verdrehbar um eine horizontale Achse, auf welchen der jeweilige Skid 10 mit seinen Auflagekufen 14 und 16 abrollen kann. Die in Figur 3 rechts angeordneten Förderrollen 80 weisen die rechte Auflagekufe 16 des Skids 10 flankierende umlaufende Seitenflansche 82 auf, wodurch verhindert ist, dass der Skid 10 zur Seite aus der Spur läuft.

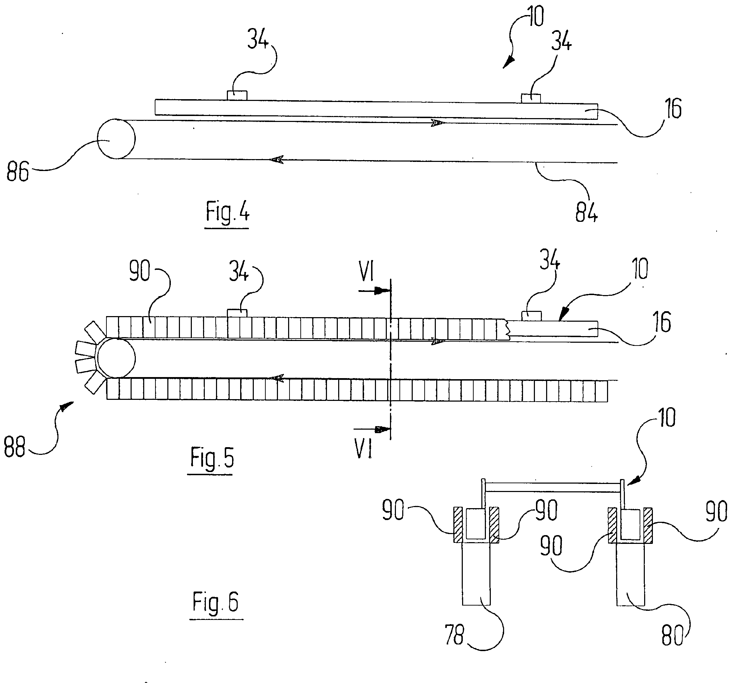

Der Skid 10 ist zu beiden Seiten mit jeweils einer Förderkette 84 der Fördereinheit 75 gekoppelt, mittels welcher er auf den Rollenpaaren 78, 80 durch den Trockentunnel 42 geführt wird. Hierzu läuft jede Förderkette 84 über zwei am Anfang und am Ende des Trockentunnels 42 angeordnete Umlenkritzel 86 um, von denen mindestens eines in an und für sich bekannter Weise angetrieben ist. Die Förderketten 84 sind in Figur 3 nicht zu erkennen; ein Abschnitt einer der Förderketten 84 und eines der Umlenkritzel 86 sind in Figur 4 schematisch gezeigt, ebenso ist der Skid 10 dort nur sehr schematisch angedeutet.

Die konditionierte Trockenluft tritt durch die Zuführöffnungen 60 in die Druckräume 54 und 58 des Trockners 36 ein und durchströmt auf ihrem weiteren Weg zu dem Trockentunnel 42 zunächst die Heißgasfilter 70. Sie strömt dann durch die Düsenhülsen 60 und wird abhängig von deren Winkelorientierung entsprechend auf die Fahrzeugkarosserie 38 geleitet. Sodann wird die nun mit aus dem Lack der Fahrzeugkarosserie ausgetretenem Lösemittel beladene Trockenluft über die Absaugkanäle 62 aus dem Trockentunnel 42 und dem Trockner 36 herausgeführt. Die Trockenluft kann dann beispielsweise einem Heiz- und Filteraggregat zugeführt werden, von wo sie entsprechend aufbereitet und konditioniert wieder in die Druckräume 54 und 56 geführt wird.

Während des Betriebs des Trockners 36 herrscht in dessen Trockentunnels 42 somit eine entsprechende Betriebsatmosphäre. Diese hat eine höhere Temperatur als die Temperatur außerhalb des Trockentunnels 42. In der Regel beträgt die Temperatur in dem Trockentunnel etwa 180 °C und die Umgebungstemperatur etwa 20 °C.

Die erhitzte Trockenluft heizt sowohl die Fahrzeugkarosserie 38 als auch den diese tragenden Skid 10 auf. Um den Wärmeeintrag in den Skid 10 und insbesondere in dessen Auflagekufen 14, 16, die dessen Hauptmasse ausmachen, zu verringern, sind die Auflagekufen 14, 16 aus hochfestem oder niedriglegiertem Stahl, aus Aluminium oder aus einer Aluminium-Legierung oder aus Titan oder einer Titan-Legierung gefertigt.

Aus diesen Materialien können die Auflagekufen 14, 16 in einer Art und Weise gefertigt werden, dass ihre Wärmekapazität kleiner ist als bei üblicherweise bei Skids verbauten Auflagekufen, die in der Regel aus Stahl geringer Festigkeit hergestellt sind.

Hochfester oder niegriglegierter Stahl hat zwar etwa die gleiche spezifische Wärmekapazität wie ein solcher Stahl geringer Festigkeit. Wenn die Auflagekufen 14, 16 des Skids aus hochfestem oder niegriglegiertem Stahl gefertigt werden, kann deren Wandstärke jedoch bei gleicher Belastbarkeit derart dünn gehalten werden, dass die Wärmekapazität der Auflagekufen 14, 16 an sich um 60% geringer ist als diejenige von den ursprünglichen Auflagekufen aus Stahl geringer Festigkeit.

Aluminium hat zwar eine höhere spezifische Wärmekapazität als Stahl geringer Festigkeit, erlaubt aber diesem gegenüber eine Gewichtsersparnis von etwa 66%. Dies führt insgesamt zu einer um 35% geringeren Wärmekapazität von Auflagekufen 14, 16 aus Aluminium gegenüber ursprünglichen Auflagekufen aus Stahl geringer Festigkeit. Entsprechendes gilt für die Verwendung einer Aluminium-Legierung für die Auflagekufen 14, 16 des Skids 10.

Wenn die Auflagekufen 14, 16 des Skids 10 aus Titan hergestellt sind, kann deren Wärmekapazität gegenüber Auflagekufen aus Stahl geringer Festigkeit sogar um etwa 70% verringert werden. Titan hat eine niedrigere spezifische Wärmekapazität als Stahl geringer Festigkeit hat, erlaubt jedoch demgegenüber geringere Wandstärken der Auflagekufen bei gleicher Belastbarkeit. Entsprechendes gilt für die Verwendung von Titan-Legierungen.

In der Praxis haben sich insbesondere Molybdän-Stähle für die Auflagekufen 14, 16 bewährt, insbesondere 20MoCr4-Stahl, 18CrNiMo7-Stahl und 41CrAlMo7-Stahl.

Als geeignete Alternative zu Molybdän-Stählen hat sich 13MnCrB4-Stahl herausgestellt.

Skids 10, deren Auflagekufen 14, 16 aus den oben genannten Materialien gefertigt sind, nehmen bei ihrem Durchlauf durch den Trockner weniger Wärme auf als Skids aus Stahl geringer Festigkeit, wie sie üblicherweise eingesetzt werden. Es geht somit auch weniger Energie bezogen auf die für den Trockenvorgang benötigte Gesamtenergie zum Aufheizen der Skids verloren.

Gegebenenfalls kann auch der gesamte Skid aus den oben genannten Materialien gefertigt sein. In diesem Fall ist die Wärmekapazität des Skids nochmals gegenüber einem Skid verringert, bei dem nur die Auflagekufen 14, 16 aus den oben genannten Materialien hergestellt sind. Auch kann nur ein Bereich der Auflagekufen 14, 16 des Skids 10 aus einem der oben genannten Materialien sein.

Ferner können auch unterschiedliche Bereiche der Auflagekufen 14, 16 des Skids 10 aus verschiedenen der oben genannten Materialien ausgebildet sein, so dass eine Auflagekufe 14, 16 aus mindestens zwei der oben genannten Materialien hergestellt ist. Zum Beispiel kann eine oberste Schicht der Auflagekufe 14 oder 16, die der aufgeheizten Fahrzeugkarosserie 38 benachbart ist, so dass dieser oberste Bereich der Auflagekufe 14 oder 16 zusätzlich durch von der Fahrzeugkarosserie stammende Strahlungswärme aufgeheizt wird, aus Titan gefertigt sein. Eine von dieser Titanschicht abliegende untere Schicht der Auflagekufe 14 oder 16 kann dann beispielsweise aus Aluminium sein.

Alternativ oder ergänzend zur oben erläuterten Ausbildung des Skids 10 kann der Trockner 36 eine thermische Isolationseinrichtung umfassen, durch welche der Wärmeeintrag in insbesondere die Auflagekufen 14, 16 des Skids 10 gegenüber einem Trockner ohne eine solche thermische Isolationseinrichtung verringert ist.

In den Figuren 5 und 6 ist als erstes Ausführungsbeispiel eine thermische Isolationseinrichtung 88 gezeigt. Diese umfasst eine Vielzahl von Isolationsplatten 90, von denen in Figur 5 nur eine mit einem Bezugszeichen versehen ist. Die Isolationsplatten 90 sind derart längs des Transportweges des Skids 10 hintereinander angeordnet, dass sie die Förderrollen 78 und 80 des Fördersystems 74 jeweils links und rechts oberhalb derselben flankieren. Dies ist insbesondere im Schnitt nach Figur 6 zu erkennen, in welcher von dem Fördersystem 74 lediglich die Förderrollen 78 und 80 schematisch angedeutet sind. Auf diese Weise laufen die Auflagekufen 14, 16 des Skids 10 jeweils zwischen Isolationsplatten 90, wenn der Skid 10 durch den Trockner 36 bewegt wird.

Die Isolationsplatten 90 sind mit einer zugehörigen Förderkette 84 an deren beiden gegenüberliegenden Seiten gekoppelt, so dass sie beim Umlauf der Förderketten 84 mitgeführt werden. Auf diese Weise bleiben stets weitgehend dieselben Isolationsplatten 90 neben einem Skid 10, während dieser durch den Trockner 36 bewegt wird.

Bei einer Abwandlung können die Isolationsplatten 90 auch unbeweglich rechts und links oberhalb der Förderollen 78 und 80 des Fördersystems 74 angeordnet sein. Eine Anordnung von Isolationsplatten 90 nur oberhalb der Förderrollen 78 und 80 ist in diesem Fall ausreichend, um eine zufrieden stellende Wärmeisolation des Skids 10 zu bewirken.

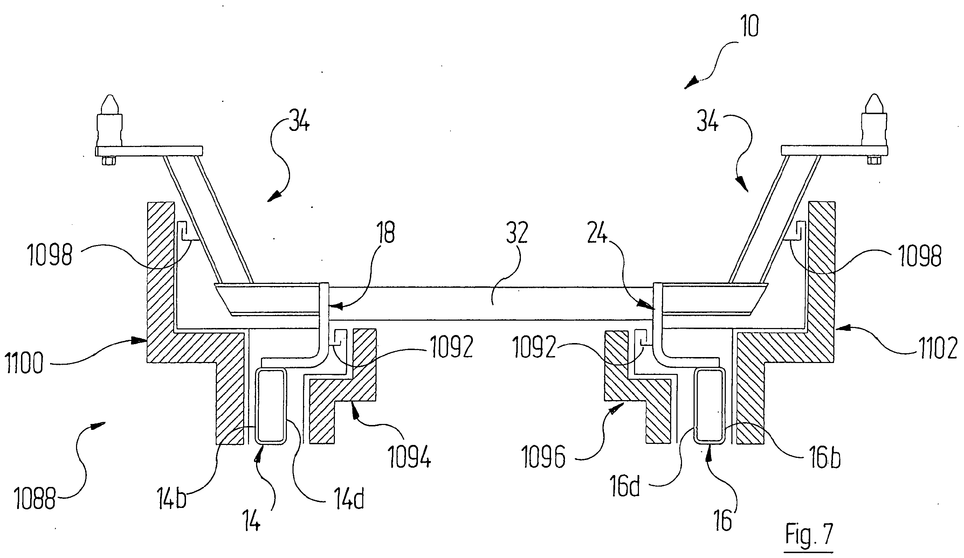

In Figur 7 ist als weiteres Ausführungsbeispiel eine thermische Isolationseinrichtung 1088 gezeigt. Im Gegensatz zur thermischen Isolationseinrichtung 88 nach den Figuren 5 und 6 wird die thermische Isolationseinrichtung 1088 vom Skid 10 mitgeführt.

Hierzu umfasst die thermische Isolationseinrichtung 1088 Traghaken 1092, welche an den sich gegenüberliegenden Außenflächen der Vertikalschenkel 22 und 28 der Halteplatten 18 und 24 des Skids 10 angebracht sind. Mit den Traghaken 1092 können thermische Isolationselemente 1094 bzw. 1096 verbunden werden, welche die Auflagekufen 14 bzw. 16 und die Halteplatten 18 und 24 bis etwa zur Höhe der Quertraversen 30, 32 auf ihren einander zu gewandten Seiten abdecken. Die Auflagekufen 14, 16 und die Halteplatten 18 und 24 des Skids 10 geben dabei jeweils eine lichte Außenkontur vor, welcher die entsprechenden Isolationselemente 1094 und 1096 folgen. Beim vorliegenden Ausführungsbeispiel sind die Isolationselemente 1094 und 1096 im Querschnitt entsprechend gewinkelt ausgebildet.

In entsprechender Weise sind an den Montagehalterungen 34 des Skids 10 nach seitlich außen ragenden Traghaken 1098 angebracht, mit welchen thermische Isolationselemente 1100 bzw. 1102 verbunden werden, welche die Auflagekufen 14 bzw. 16 und die Halteplatten 18 und 24 vollständig sowie die Montagehalterungen 34 teilweise auf ihren von einander abliegenden Seiten abdecken.

Die Auflagekufen 14, 16, die Halteplatten 18, 24 und die Montagehalterungen 34 des Skids 10 geben dabei jeweils eine lichte Außenkontur vor, welcher die entsprechenden Isolationselemente 1100 und 1102 folgen. Beim vorliegenden Ausführungsbeispiel sind die Isolationselemente 1100 und 1102 im Querschnitt entsprechend gewinkelt ausgebildet. Die Isolationselemente 1094, 1096, 1100 und 1102 schirmen so neben den Auflagekufen 14, 16 des Skids 10 auch noch weitere Bauteile und Bereiche des Skids 10 gegenüber einem Wärmeeintrag im Trockentunnel 42 ab. Dies sind beim vorliegenden Ausführungsbeispiel bereichsweise die Halteplatten 18 und 24 sowie bereichsweise die Montagehalterungen 34.

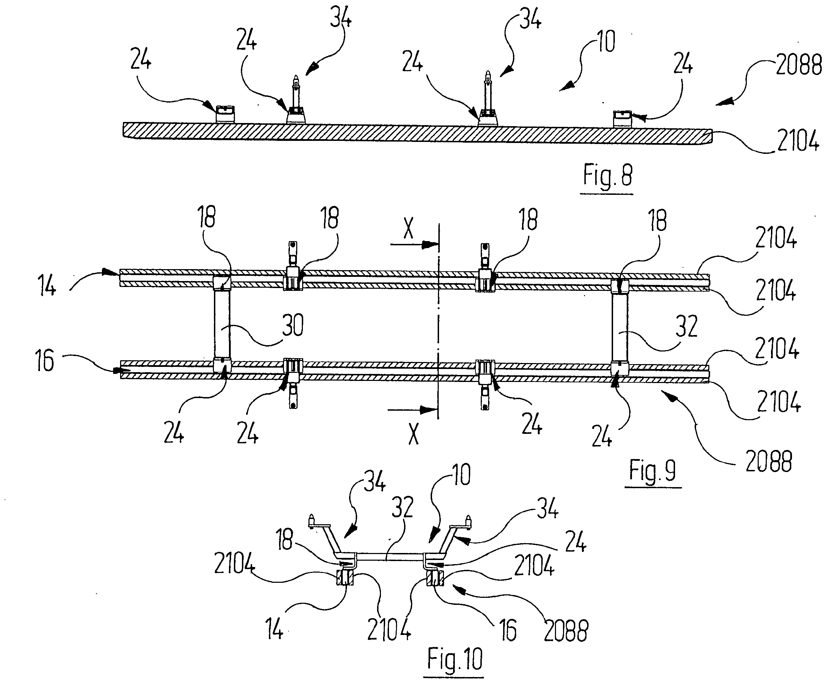

In den Figuren 8 bis 10 ist als weiteres Ausführungsbeispiel eine thermische Isolationseinrichtung 2088 gezeigt, welche ebenfalls von dem Skid 10 mitgeführt wird. Im Unterschied zur thermischen Isolationseinrichtung 1088 nach Figur 7 umfasst die thermische Isolationseinrichtung 2088 vier geradlinige Isolationselemente 2104, wobei eines von diesen auf jeder Seitenfläche der Auflagekufen 14, 16 des Skids 10 angebracht ist.

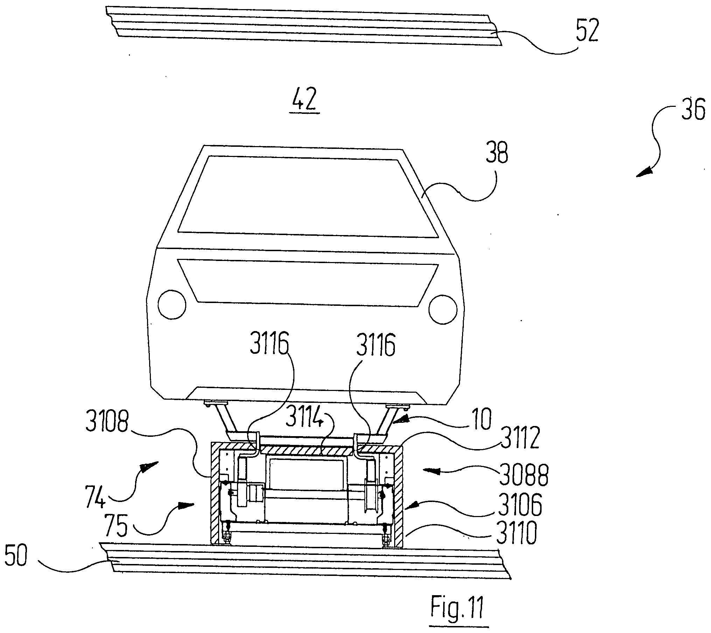

Figur 11 zeigt als weiteres Ausführungsbeispiel eine thermische Isolationseinrichtung 3088, welche wiederum an dem Fördersystem 74 des Trockners 36 vorgesehen ist. Der Übersichtlichkeit halber ist in Figur 11 nur ein Ausschnitt des Trockners 36 gezeigt.

Die thermische Isolationseinrichtung 3088 umfasst eine Isolationshülle 3106, welche das Fördersystem 74 weitgehend vollständig sowohl an dessen beiden Seiten als auch an dessen Oberseite umgibt. Die Isolationshülle 3106 muss das Fördersystem 74 nicht vollständig umgeben, eine Abschirmung gegenüber dem Trockentunnel 42 reicht aus. Hierzu umfasst die Isolationshülle 3106 zwei rechts und links am Fördersystem 74 angeordnete vertikale Isolationswände 3108 und 3110 sowie eine horizontale obere Isolationswand 3112.

Die horizontale Isolationswand 3112 ist in einer Höhe angeordnet, bei welcher die Auflagekufen 14, 16 des Skids 10 unterhalb der horizontalen Isolationswand 3112, die Quertraversen 30 und 32 des Skids 10 jedoch oberhalb der horizontalen Isolationswand 3112 angeordnet sind, wenn der Skid 10 durch den Trockner 36 geführt wird.

Dazu weist die horizontale Isolationswand 3112 ein separates Mittelteil 3114 auf, welches derart ausgebildet ist, dass in der horizontalen Isolationswand 3112 zwei in Transportrichtung und parallel zueinander verlaufende Durchgangsschlitze 3116 verbleiben.

Durch diese erstrecken sich die Vertikalschenkel 22, 28 der Halteplatten 18 und 24 des Skids 10, wenn dieser durch den Trockner 36 gefördert wird.

Die thermischen Isolationseinrichtungen 88, 1088, 2088 und 3088 bewirken, dass ein geringerer Anteil der den Trockentunnel 42 des Trockners 36 durchströmenden Trockenluft in direkten Kontakt mit den Auflagekufen 14, 16 kommen kann als dies ohne die thermischen Isolationseinrichtungen 88, 1088, 2088 und 3088 möglich wäre. Auf diese Weise wird der Wärmeeintrag in die Auflagekufen 14, 16 des Skids 10 durch die Trockenluft bei ihrem Weg durch den Trockentunnel 42 verringert.

Wie eingangs erläutert, wird eine gute Isolationswirkung erzielt, wenn die Isolationsplatten 90, die Isolationselemente 1100, 1102, 2104 oder die Isolationswände 3108, 3110, 3112 als doppelwandige und mit Mineralstoff gefüllte Platte oder aus Mineralstoff, aus Keramikschaum oder aus Kunststoffschaum, insbesondere als Platte hieraus, gebildet sind.

Insgesamt wird dadurch ein geringerer Anteil der aufgewendeten Gesamtenergie dafür verwendet, um den Skid 10 und insbesondere dessen Auflagekufen 14, 16 bei seinem Durchgang durch den Trockner 36 aufzuheizen.

Die oben beschriebenen thermischen Isolationseinrichtungen 88 und 3088 sind dabei von dem Fördersystem 74 umfasst, wogegen die thermischen Isolationseinrichtungen 1088 und 2088 von dem Skid 10 umfasst sind.

## Patentansprüche

1. Anlage zum Trocknen von Gegenständen, insbesondere von Fahrzeugkarosserien, mit
a) wenigstens einer Trockenkammer (42), in welcher eine Betriebsatmosphäre erzeugbar ist, die eine höhere Temperatur als die Atmosphäre außerhalb der Trockenkammer (42) hat;
b) einem Fördersystem (74), welches wenigstens einen Skid (10), auf welchem der Gegenstand (38) durch die Trockenkammer (42) förderbar ist, und eine Fördereinheit (75) für den wenigstens einen Skid (10) umfasst;
wobei
c) der Skid (10) wenigstens zwei Auflagekufen (14, 16) umfasst, an denen eine Befestigungseinrichtung (34) zum lösbaren Befestigen des Gegenstandes (38) angebracht ist,
d) eine thermische Isolationseinrichtung (88; 1088; 2088; 3088) vorgesehen ist, welche wenigstens die Auflagekufen (14, 16) des Skids (10) zumindest bereichsweise abschirmt.

2. Anlage nach Anspruch 1, **dadurch gekennzeichnet, dass** wenigstens die Auflagekufen (14, 16) des Skids (10) zumindest bereichsweise aus einem der nachstehenden Materialien gebildet sind: hochfester oder niedriglegierter Stahl, Aluminium oder Aluminium-Legierung; Titan oder Titan-Legierung.

3. Anlage nach Anspruch 2, **dadurch gekennzeichnet, dass** wenigstens die Auflagekufen des Skids zumindest bereichsweise aus einem Molybdän-Stahl gebildet sind.

4. Anlage nach Anspruch 2, **dadurch gekennzeichnet, dass** wenigstens die Auflagekufen des Skids zumindest bereichsweise aus 20MoCr4-Stahl, 18CrNiMo7-Stahl, 41CrAlMo7-Stahl oder 13MnCrB4-Stahl gebildet sind.

5. Anlage nach einem der Ansprüche 1 bis 4, **dadurch gekennzeichnet, dass** die thermische Isolationseinrichtung (88; 1088; 2088; 3088) ein oder mehrere Isolationselemente (90; 1100, 1102; 2104; 3108, 3110, 3112) umfasst, welche auf einer ersten Längsseite (14b, 16b) der Auflagekufen (14, 16) und/oder auf der zweiten Längsseite (14d; 16d) der Auflagekufen (14, 16) des Skids (10) angeordnet sind, wenn der Skid (10) durch die Trockenkammer (42) gefördert wird.

6. Anlage nach Anspruch 5, **dadurch gekennzeichnet, dass** wenigstens ein Isolationselement (90; 1100, 1102; 2104; 3108, 3110, 3112) als doppelwandige und mit Mineralstoff gefüllte Platte oder aus Mineralstoff, aus Keramikschaum oder aus Kunststoffschaum, insbesondere als Platte hieraus, gebildet ist.

7. Anlage nach Anspruch 5 oder 6, **dadurch gekennzeichnet, dass** die thermische Isolationseinrichtung (88; 3088) von der Fördereinheit (75) des Fördersystems (74) umfasst ist.

8. Anlage nach Anspruch 7, **dadurch gekennzeichnet, dass** die thermische Isolationseinrichtung (88) Isolationsplatten (90) umfasst, welche derart angeordnet sind, dass sie die Auflagekufen (14, 16) des Skids (10) seitlich, vorzugsweise zu jeweils beiden Seiten, flankieren, wenn dieser durch die Trockenkammer (42) gefördert wird.

9. Anlage nach Anspruch 8, **dadurch gekennzeichnet, dass** die Isolationsplatten (90) von Zugmitteln (84) der Fördereinheit (75) mitgeführt werden.

10. Anlage nach Anspruch 7, **dadurch gekennzeichnet, dass** die thermische Isolationseinrichtung (3088) eine Isolationshülle (3106) umfasst, welche die Fördereinheit (75) zumindest gegenüber der Trockenkammer (42) weitgehend abschirmt.

11. Anlage nach Anspruch 5 oder 6, **dadurch gekennzeichnet, dass** die thermische Isolationseinrichtung (1088; 2088) von dem Skid (10) umfasst ist.

12. Anlage nach Anspruch 11, **dadurch gekennzeichnet, dass** der Skid (10) Isolationselemente (1094, 1096, 1100, 1102; 2104) trägt.

13. Anlage nach Anspruch 12, **dadurch gekennzeichnet, dass** die Isolationselemente (1094, 1096, 1100, 1102) zumindest bereichsweise auch weitere Bauteile (18, 24, 34) des Skids (10) abschirmen.

## Claims

1. Assembly for drying objects, in particular car bodies, having
a) at least one drying chamber (42) in which it is possible to generate an operating atmosphere that is at a higher temperature than the atmosphere outside the drying chamber (42);
b) a conveying system (74) that comprises at least one skid (10) on which the object (38) can be conveyed through the drying chamber (42), and a conveying unit (75) for the at least one skid (10) ;
wherein
c) the skid (10) comprises at least two support runners (14, 16) to which is attached a securing device (34) for releasably securing the object (38),
d) there is provided a thermal insulation device (88; 1088; 2088; 3088) which shields at least certain regions of at least the support runners (14, 16) of the skid (10).

2. Assembly according to Claim 1, **characterized in that** at least certain regions of at least the support runners (14, 16) of the skid (10) are made of one of the following materials: high-strength or low-alloy steel, aluminium or aluminium alloy; titanium or titanium alloy.

3. Assembly according to Claim 2, **characterized in that** at least certain regions of at least the support runners of the skid are made of a molybdenum steel.

4. Assembly according to Claim 2, **characterized in that** at least certain regions of at least the support runners of the skid are made of 20MoCr4 steel, 18CrNiMo7 steel, 41CrAlMo7 steel or 13MnCrB4 steel.

5. Assembly according to one of Claims 1 to 4, **characterized in that** the thermal insulation device (88; 1088; 2088; 3088) comprises one or more insulation elements (90; 1100, 1102; 2104; 3108, 3110, 3112) which are arranged on a first longitudinal side (14b, 16b) of the support runners (14, 16) and/or on the second longitudinal side (14d, 16d) of the support runners (14, 16) of the skid (10) when the skid (10) is conveyed through the drying chamber (42).

6. Assembly according to Claim 5, **characterized in that** at least one insulation element (90; 1100, 1102; 2104; 3108, 3110, 3112) is formed as a twin-walled, mineral-material-filled plate, or consists of mineral material, ceramic foam or synthetic foam, in particular as a plate thereof.

7. Assembly according to Claim 5 or 6, **characterized in that** the thermal insulation device (88; 3088) forms part of the conveying unit (75) of the conveying system (74).

8. Assembly according to Claim 7, **characterized in that** the thermal insulation device (88) comprises insulation plates (90) which are arranged such that they flank the support runners (14, 16) of the skid (10) laterally, preferably respectively on both sides, when the skid (10) is conveyed through the drying chamber (42).

9. Assembly according to Claim 8, **characterized in that** the insulation plates (90) are entrained by traction means (84) of the conveying unit (75).

10. Assembly according to Claim 7, **characterized in that** the thermal insulation device (3088) comprises an insulating shell (3106) that substantially shields the conveying unit (75) at least with respect to the drying chamber (42).

11. Assembly according to Claim 5 or 6, **characterized in that** the thermal insulation device (1088; 2088) forms part of the skid (10).

12. Assembly according to Claim 11, **characterized in that** the skid (10) bears insulation elements (1094, 1096, 1100, 1102; 2104).

13. Assembly according to Claim 12, **characterized in that** the insulation elements (1094, 1096, 1100, 1102) also shield at least certain regions of other components (18, 24, 34) of the skid (10).

## Revendications

1. Installation destinée au séchage d'objets, en particulier de carrosseries de véhicules, comprenant
a) au moins une chambre de séchage (42), dans laquelle peut être créée une atmosphère de fonctionnement présentant une température plus élevée que celle de l'atmosphère régnant à l'extérieur de ladite chambre de séchage (42) ;
b) un système de convoyage (74) incluant au moins un chevalet de transport (10) sur lequel l'objet (38) peut être acheminé à travers ladite chambre de séchage (42), et une unité de convoyage (75) dédiée audit chevalet de transport (10) à présence minimale ;
sachant
c) que le chevalet de transport (10) est muni d'au moins deux patins d'appui (14, 16), sur lesquels est implanté un dispositif de fixation (34) dévolu à la fixation libérable dudit objet (38),
d) qu'il est prévu un dispositif d'isolation thermique (88 ; 1088 ; 2088 ; 3088) procurant un écran isolant, au moins par zones, au moins auxdits patins d'appui (14, 16) dudit chevalet de transport (10).

2. Installation selon la revendication 1, **caractérisée par le fait qu'**au moins les patins d'appui (14, 16) du chevalet de transport (10) sont constitués, au moins par zones, de l'un des matériaux suivants : acier hautement résistant ou faiblement allié, aluminium ou alliage d'aluminium ; titane ou alliage de titane.

3. Installation selon la revendication 2, **caractérisée par le fait qu'**au moins les patins d'appui du chevalet de transport sont constitués, au moins par zones, d'un acier au molybdène.

4. Installation selon la revendication 2, **caractérisée par le fait qu'**au moins les patins d'appui du chevalet de transport consistent, au moins par zones, en de l'acier 20MoCr4, en de l'acier 18CrNiMo7, en de l'acier 41CrAlMo7 ou en de l'acier 13MnCrB4.

5. Installation selon l'une des revendications 1 à 4, **caractérisée par le fait que** le dispositif d'isolation thermique (88 ; 1088 ; 2088 ; 3088) inclut un ou plusieurs élément(s) isolant(s) (90; 1100, 1102; 2104; 3108, 3110, 3112) disposé(s) sur un premier côté longitudinal (14b, 16b) des patins d'appui (14, 16), et/ou sur le second côté longitudinal (14d ; 16d) desdits patins d'appui (14, 16) du chevalet de transport (10), lorsque ledit chevalet de transport (10) est acheminé à travers la chambre de séchage (42).

6. Installation selon la revendication 5, **caractérisée par le fait qu'**au moins un élément isolant (90 ; 1100, 1102 ; 2104 ; 3108, 3110, 3112) se présente comme un panneau à paroi double, empli d'une substance minérale, ou comme une substance minérale, une mousse de céramique ou une mousse de matière plastique, en particulier comme un panneau constitué de ces dernières.

7. Installation selon la revendication 5 ou 6, **caractérisée par le fait que** le dispositif d'isolation thermique (88 ; 3088) fait partie intégrante de l'unité de convoyage (75) du système de convoyage (74).

8. Installation selon la revendication 7, **caractérisée par le fait que** le dispositif d'isolation thermique (88) inclut des panneaux isolants (90) occupant des emplacements tels qu'ils flanquent les patins d'appui (14, 16) du chevalet de transport (10), respectivement des deux côtés, de préférence, lorsque ce dernier est acheminé à travers la chambre de séchage (42).

9. Installation selon la revendication 8, **caractérisée par le fait que** les panneaux isolants (90) sont entraînés conjointement par des moyens de traction (84) de l'unité de convoyage (75).

10. Installation selon la revendication 7, **caractérisée par le fait que** le dispositif d'isolation thermique (3088) inclut un manchon isolant (3106) procurant un écran isolant à l'unité de convoyage (75), dans une ample mesure, au moins par rapport à la chambre de séchage (42).

11. Installation selon la revendication 5 ou 6, **caractérisée par le fait que** le dispositif d'isolation thermique (1088 ; 2088) fait partie intégrante du chevalet de transport (10).

12. Installation selon la revendication 11, **caractérisée par le fait que** le chevalet de transport (10) porte des éléments isolants (1094, 1096, 1100, 1102 ; 2104).

13. Installation selon la revendication 12, **caractérisée par le fait que** les éléments isolants (1094, 1096, 1100, 1102) procurent également, au moins par zones, un écran isolant à d'autres pièces structurelles (18, 24, 34) du chevalet de transport (10).
